# FASCICULE DE BREVET EUROPEEN

(11) **EP 3 325 195 B1**
(45) Date de publication et mention de la délivrance du brevet: **29.09.2021**
(21) Numéro de dépôt: 16753946.9
(22) Date de dépôt: 21.07.2016
(51) Int. Cl.: B22F 9/00, C08J 5/22, C08K 3/08, G02B 5/00, G02F 1/00, B29D 11/00, B32B 17/10, B32B 18/00, B32B 29/00, B82Y 20/00, C03C 17/00, C03C 17/06, C03C 17/28, G02B 1/10

(54) **PROCÉDÉ DE PRÉPARATION D'UN MATÉRIAU BICHROMATIQUE SOUS LA FORME D'UN FILM**
VERFAHREN ZUR HERSTELLUNG EINES BICHROMATISCHEN MATERIALS IN FORM EINER FOLIE
METHOD FOR PRODUCING A BICHROMATIC MATERIAL IN THE FORM OF A FILM

(30) Priorité: 22.07.2015 FR 1556942
(43) Date de publication de la demande: 30.05.2018
(73) Titulaire: Centre National de la Recherche Scientifique, 75016 Paris (FR); Université Paris-Saclay, 91190 Gif-sur-Yvette (FR); Université de Paris, 75006 Paris (FR)
(72) Inventeur: PLUCHERY, Olivier, 75007 Paris (FR); REMITA BOSI, Hynd, 91400 Orsay (FR); SCHAMING, Delphine, 91300 Massy (FR)
(74) Mandataire: Novagraaf Technologies
(86) Numéro de dépôt international: PCT/FR2016/051902
(87) Numéro de publication internationale: WO 2017/013373

(56) Documents cités:
- WO-A2-2006/133288
- WALTER CASERI: "INORGANIC NANOPARTICLES AS OPTICALLY EFFECTIVE ADDITIVES FOR POLYMERS", CHEMICAL ENGINEERING COMMUNICATIONS, vol. 196, no. 5, 15 décembre 2008 (2008-12-15), pages 549-572, XP055242533, US ISSN: 0098-6445, DOI: 10.1080/00986440802483954
- D.J. BARBER, I. C. FREESTONE: "AN INVESTIGATION OF THE ORIGIN OF THE COLOUR OF THE LYCURGUS CUP BY ANALYTICAL TRANSMISSION ELECTRON MICROSCOPY", ARCHAEOMETRY, 1990, - 1990, pages 33-45, XP002753105, DOI: 10.1111/j.1475-4754.1990.tb01079.x
- LU A H ET AL: "Dichroic thin layer films prepared from alkanethiol-coated gold nanoparticles", JOURNAL OF PHYSICAL CHEMISTRY. B, MATERIALS, SURFACES, INTERFACES AND BIOPHYSICAL, WASHINGTON, DC, US, vol. 101, no. 45, 6 novembre 1997 (1997-11-06), pages 9139-9142, XP002418078, ISSN: 1089-5647, DOI: 10.1021/JP972379Q
- DAVID S. DOS SANTOS ET AL: "Gold Nanoparticle Embedded, Self-Sustained Chitosan Films as Substrates for Surface-Enhanced Raman Scattering", LANGMUIR, vol. 20, no. 23, 1 novembre 2004 (2004-11-01), pages 10273-10277, XP055242537, NEW YORK, NY; US ISSN: 0743-7463, DOI: 10.1021/la048328j

## Description

L'invention concerne un procédé de préparation d'un matériau bichromatique, sous la forme d'un film translucide, comprenant des nanoparticules d'or monodisperses et au moins une macromolécule, ledit matériau bichromatique et ses utilisations.

Elle s'applique plus particulièrement aux matériaux qui peuvent présenter deux couleurs distinctes à l'œil nu, une couleur en transmission et une couleur en rétrodiffusion. Ainsi, lorsqu'une source de lumière est placée derrière ledit matériau, celui-ci apparaît d'une certaine couleur, dite « couleur de transmission » ; et lorsqu'une source de lumière est située du même côté que l'observateur (i.e. devant ledit matériau), celui-ci apparaît d'une autre couleur dite « couleur de rétrodiffusion », ladite couleur de rétrodiffusion étant complémentaire de la couleur de transmission. Il est noté qu'un couple de couleurs complémentaires est défini comme un couple de couleurs qui, mélangées, annulent la perception de couleur, produisant un gris neutre. Ainsi, un matériau présentant ces caractéristiques est bichromatique, l'effet bichromatique ne dépendant pas de l'angle d'observation.

Cet effet a été pour la première fois observé dans un objet décoratif du IV^{ème} siècle, la coupe de Lycurgus, qui est exposée actuellement au British Museum à Londres. En effet, lorsque la coupe, constituée de verre, est éclairée de l'extérieur (la lumière est réfléchie ou rétro-diffusée), elle est verte et plutôt opaque. En revanche, lorsque la source lumineuse est placée à l'intérieur (la lumière est transmise), la coupe apparaît rouge et translucide. Un tel verre, dit rouge rubis, est un objet antique doté de couleurs structurales, c'est-à-dire de teintes dues aux interactions de la lumière et de la structure du matériau éclairé, et non à des pigments. L'analyse de cette coupe au microscope à haute résolution a permis de révéler sa nanostructure, et en particulier la présence de nanoparticules métalliques d'or et d'argent de taille d'environ 70 nm, ainsi que la présence de cuivre. Cependant, personne à ce jour, n'a pu trouver et décrire comment les verriers romains avaient fabriqué une telle coupe.

Le document Walter caseri « inorganic nanoparticles as optically effctive additives for polymers » Chemical engineering communications, vol 196, no 5, 15 décembre 2008, page 549-572 porte sur des additifs optiquement efficaces pour polymères qui permettent d'obtenir des composites polymère-nanoparticules métalliques présentant des propriétés de transparence et des propriétés optiques particulières et un matériau présentant un dichroïsme linéaire correspondant notamment à une variation de la transmission en fonction, par exemple de la polarisation.

Le document D.J Barber, I.C. Freestone : « an investigation of the origin of the colour of the Lycurgus cup by analytical transmission election microscopy" archaeometry, 1990, page 33-45 étudie l'origine de la couleur de la coupe de Lycurgus qui comprend notamment de l'or, de l'argent et du cuivre et notamment des nanoparticules d'or.

L'utilisation d'un métal sous la forme de nanoparticules peut permettre de conférer à une suspension ou à un substrat solide comprenant lesdites nanoparticules une couleur différente de la couleur originale du métal massif (i.e. n'étant pas sous forme de nanoparticules). En effet, lorsqu'une particule métallique est soumise à un champ électromagnétique dont la longueur d'onde est beaucoup plus grande que la taille des particules : λ >> Ø_{particules}, tous les électrons libres de la bande de conduction subissent le même champ et oscillent collectivement et en phase. Lorsque la fréquence de l'onde incidente correspond à la fréquence propre de ces oscillations, il se produit un phénomène de résonance, appelé résonance de plasmon. Cette résonance a lieu dans le domaine du visible, seulement pour l'or, le cuivre et l'argent, d'où la coloration particulière des nanoparticules de ces métaux. Typiquement, des nanoparticules d'or de 20 nm ont une bande de résonance de plasmon à 520 nm (absorption dans le vert) et sont rouges. La fréquence de résonance de plasmon dépend de la nature du métal, de la taille de la particule et de sa forme ainsi que des propriétés diélectriques du substrat ou du milieu environnant (e.g. suspension) et des interactions inter-particules. Il est possible de jouer sur ces différents paramètres pour faire varier la couleur des nanoparticules d'or dans tout le domaine du visible, voire de déplacer la fréquence de résonance de plasmon dans le proche infrarouge.

Iwakoshi et al. [Gold Bulletin, 2005, 38/3, 107-112] ont décrit la préparation d'une pâte comprenant jusqu'à 85% en masse de nanoparticules d'or présentant un diamètre allant de 10 à 30 nm et un matériau polymère choisi parmi un copolymère bloc soluble dans l'eau à base de polyacrylate (polymère-W) et un copolymère bloc à base de polyester (polymère-S). Ces deux polymères possèdent des fonctions amine secondaire ou tertiaire sur la chaîne principale et peuvent fixer les nanoparticules d'or. La pâte peut être obtenue par un procédé comprenant une étape de mise en contact d'une solution aqueuse d'acide tétrachloroaurique [HAuCl₄] avec un des matériaux polymères éventuellement dissous dans un solvant organique, optionnellement une étape de chauffage du mélange obtenu jusqu'à 50°C environ, une étape d'ajout d'un agent réducteur [le 2-(diméthylamino)éthanol], puis une étape de purification (déionisation, échange d'ions, évaporation, décantation, etc...). La pâte est ensuite utilisée pour produire une peinture thermodurcissable rouge présentant un effet « flip-flop » ou nacré (i.e. en fonction de l'angle d'observation et de l'incidence, la couleur varie), un film en verre rouge ou un film polymère à l'aspect métallique ou doré. Ainsi, le film polymère, le film en verre et la peinture ne présentent pas un effet bichromatique tel que défini dans l'invention, c'est-à-dire un effet optique induisant une couleur en rétrodiffusion et une couleur en transmission.

Pérez-Juste et al. [Adv. Funct. Mater., 2005, 15, 1065-1071] ont décrit un procédé de préparation d'un film polymère comprenant des nanoparticules d'or sous forme de bâtonnets (de longueur d'environ 33,7 nm et de largeur d'environ 13,7 nm) et de l'alcool polyvinylique, ledit procédé comprenant une étape de mise en contact d'une solution colloïdale desdites nanoparticules d'or avec une solution d'alcool polyvinylique, une étape de séchage du mélange obtenu précédemment pour obtenir un film, une étape de chauffage et enfin une étape consistant à étirer le film. Les étapes de chauffage et d'étirage permettent d'aligner les nanoparticules d'or dans une direction préférée. Le film polymère ainsi obtenu possède des propriétés optiques qui dépendent de la polarisation de la lumière. Ainsi, sous un éclairage en lumière polarisée, le film apparaît rouge ou bleu suivant la direction du champ électrique incident (i.e. orientation parallèle ou perpendiculaire du plan de polarisation de la lumière par rapport à l'axe des fibres ou la direction d'étirement du film). Ainsi, un tel film polymère ne présente pas un effet optique induisant des couleurs différentes en rétrodiffusion et en transmission.

Il existe de nombreuses méthodes de synthèse des nanoparticules d'or. Il est toutefois possible de les répertorier en quatre grandes catégories : 1) la synthèse par voie chimique en solution aqueuse ou en solution organique, 2) la synthèse chimique sur des surfaces, 3) la préparation sous ultra-vide de nanoparticules d'or déposées sur une surface, et 4) l'utilisation de sources d'agrégats et leur tri en masse. D'autres méthodes utilisées moins fréquemment existent telles que la photoablation laser, la sonolyse ou la réduction intracellulaire par divers agents. Le choix de la méthode de synthèse dépend de la taille des nanoparticules, de leur forme (sphériques, ovales, triangulaires, sous forme de bâtonnets, sous forme de décaèdres, etc...) et du conditionnement (nanoparticules en solution stabilisées par un tensioactif ou déposées sur un support) que l'on souhaite obtenir selon l'application envisagée.

En particulier, la méthode de réduction de Turkevich-Frens est connue pour préparer des nanoparticules d'or en solution aqueuse (i.e. solution colloïdale) [Nature Physical Science, 1973, 241, 20-22]. Cette méthode de la 1^{ère} catégorie repose sur la réduction à l'aide d'un agent réducteur (citrate de sodium), d'un sel d'or dans lequel l'or est à l'état d'oxydation (+III) (e.g. acide tétrachloroaurique HAuCl₄ ou tétrachloroaurate de potassium KAuCl₄) en or métallique (état d'oxydation 0). L'agent réducteur joue également le rôle d'agent stabilisant ou tensioactif afin de favoriser la formation de nanoparticules d'or. En contrôlant précisément les concentrations de réactifs, cette méthode conduit à des nanoparticules sphériques de diamètre prédictible entre 12 et 30 nm, avec très peu de variabilité de diamètre (écart-type sur les diamètres de l'ordre de 1 nm).

Ainsi, le but de la présente invention est de pallier les inconvénients de l'art antérieur précité et de fournir un procédé de préparation d'un matériau bichromatique, c'est-à-dire un matériau apparaissant sous deux couleurs complémentaires suivant le mode d'éclairage (source de lumière en transmission ou en rétrodiffusion), ledit procédé étant simple, économique et permettant de moduler efficacement lesdites deux couleurs complémentaires.

Un autre but de l'invention est de fournir un matériau bichromatique, c'est-à-dire apparaissant sous deux couleurs complémentaires suivant le mode d'éclairage (source de lumière en transmission ou en rétrodiffusion) qui soit économique, qui puisse être facilement manipulé et utilisé dans de nombreuses applications, et notamment dans le domaine de l'automobile, de l'agroalimentaire ou du luxe (cosmétique, lunettes de protection solaire ou correctives, etc...).

Ces buts sont atteints par l'invention qui va être décrite ci-après. L'invention a donc pour premier objet un procédé de préparation d'un matériau bichromatique sous la forme d'un film translucide, ledit film translucide étant un film présentant un coefficient de transmission optique allant de 10% à 80%, mesuré par un spectromètre UV-visible à une longueur d'onde de 490 nm, ledit matériau bichromatique comprenant des nanoparticules monodisperses constituées d'or et éventuellement d'un métal noble choisi parmi le platine, le palladium, l'argent et le cuivre (NP), et au moins une macromolécule organique choisie parmi les protéines, les polysaccharides et les polymères synthétiques, ledit procédé comportant les étapes suivantes :
i) une étape de mélange d'au moins une macromolécule organique choisie parmi les protéines, les polysaccharides et les polymères synthétiques avec une suspension colloïdale S₀ de NP, et
ii) une étape de séchage du mélange de l'étape i), afin de former un matériau bichromatique sous la forme d'un film translucide déposé sur un support,
ledit procédé étant caractérisé en ce que :
* les NP sont sous forme sphérique et présentent un diamètre allant de 70 à 100 nm environ, et de préférence allant de 75 à 90 nm environ, les NP étant monodisperses, elles sont définies par un diamètre d = d₀ +/- ε, avec ε < 0,2xd₀,
* la concentration molaire en or dans le mélange de l'étape i) va de 10⁻⁴ à 5x10⁻¹ mol/l environ, et de préférence de 2x10⁻⁴ à 5x10⁻³ mol/l environ,
* la concentration molaire en macromolécule dans le mélange de l'étape i) va de 0,001 à 5 mol/l environ, de préférence de 0,01 à 2 mol/l environ, et de préférence encore de 0,1 à 1 mol/l environ,
* le film présente une densité volumique allant de 0,5x10¹⁰ à 5,0x10¹⁰ de NP/cm³ environ pour 1 mm d'épaisseur E de film, et de préférence de 1,0x10¹⁰ à 3,0x10¹⁰ de NP/cm³ environ pour 1 mm d'épaisseur E de film, et
* ledit matériau présente deux couleurs complémentaires distinctes à l'œil nu, une couleur en transmission et une couleur en rétrodiffusion.

Dans la présente invention, l'expression « nanoparticules monodisperses constituées d'or et éventuellement d'un métal noble choisi parmi le platine, le palladium, l'argent et le cuivre » est également dénommé « NP ».

Dans la présente invention, l'expression « suspension colloïdale de NP » signifie une suspension colloïdale comprenant des NP.

Dans l'invention, les NP étant monodisperses, elles ont donc sensiblement le même diamètre. En particulier, elles présentent un écart-type sur les diamètres allant de 1 à 15 nm environ, et de préférence de 1 à 10 nm environ.

Selon l'invention, les NP présentent un diamètre d = d₀ ± ε, avec ε < 0,2xd₀.

L'or (respectivement le métal noble) est à l'état d'oxydation zéro dans le mélange de l'étape i) et dans le matériau bichromatique de l'invention.

Le métal noble est de préférence choisi parmi le platine, l'argent et le cuivre.

Dans la présente invention, le terme « matériau bichromatique » signifie un matériau qui présente deux couleurs complémentaires distinctes à l'œil nu, une couleur en transmission et une couleur en rétrodiffusion. Ainsi, lorsqu'une source de lumière est placée derrière ledit matériau (i.e. le matériau est alors entre la lumière et l'observateur), celui-ci apparaît d'une certaine couleur, dite « couleur de transmission » ; et lorsqu'une source de lumière est située du même côté que l'observateur (i.e. devant ledit matériau), celui-ci apparaît d'une autre couleur dite « couleur de rétrodiffusion », ladite couleur de rétrodiffusion étant complémentaire de la couleur de transmission.

Ainsi, dans l'invention, deux couleurs complémentaires sont obtenues quand on compare transmission et rétrodiffusion, sans utiliser la polarisation. Le phénomène de bichromatisme de l'invention est d'ailleurs le même quelle que soit la polarisation de la lumière.

La couleur d'un matériau en transmission s'explique par sa capacité à absorber une gamme de longueur d'onde dans le visible (400-800 nm). La perception visuelle des couleurs devient sensible quand le maximum de l'absorption vaut au moins 0,01 unité d'absorbance et l'œil humain perçoit la couleur complémentaire. Dans le cas présent, l'absorption est provoquée par la résonance de plasmon des NP. La couleur d'un matériau en rétrodiffusion s'explique par sa capacité à diffuser la lumière en présentant un maximum de diffusion. Les inventeurs de la présente demande ont découvert de façon surprenante un procédé permettant d'optimiser la perception bichromatique, en utilisant le fait que les coefficients d'absorption et de diffusion du matériau peuvent être rendus sensiblement égaux. Cet effet s'appuie sur la résonance de plasmon et cela suppose l'utilisation de NP de tailles précitées (i.e. diamètres de 70-100 nm).

Dans l'invention, l'expression « film translucide » signifie un film présentant un coefficient de transmission optique allant de 10% environ à 80% environ, mesuré par un spectromètre UV-visible conventionnel.

La caractéristique translucide du film obtenu par le procédé de l'invention dépend de son épaisseur.

Le coefficient de transmission optique est mesuré à une longueur d'onde de 490 nm avec un spectromètre UV-visible conventionnel. Celui-ci est identique quelle que soit l'orientation, d'un côté ou d'un autre, du film lors de la mesure.

Le film obtenu selon le procédé de l'invention présente une densité volumique allant de 0,5x10¹⁰ à 5,0x10¹⁰ de NP/cm³ environ pour 1 mm d'épaisseur E de film, et de préférence de 1,0x10¹⁰ à 3,0x10¹⁰ de NP/cm³ environ pour 1 mm d'épaisseur E de film. En d'autres termes, le film obtenu par le procédé de l'invention présente une densité volumique D_{V} variant de D_{V1} = (0,5x10¹⁰)/E NP/cm³ environ à D_{V2} = (5,0x10¹⁰)/E NP/cm³ environ, et de préférence variant de D_{V1'} = (1,0x10¹⁰)/E NP/cm³ environ à D_{V2'} = (3,0x10¹⁰)/E NP/cm³ environ, E étant l'épaisseur du film en mm.

Dans l'invention, l'expression « macromolécule organique » signifie une molécule organique (i.e. comprenant au moins des atomes de carbone et d'hydrogène, et éventuellement des atomes d'oxygène et/ou d'azote et/ou de soufre, etc...) ou un ensemble de molécules organiques qui possède une masse molaire ou une masse molaire moyenne d'au moins 25 000 g/mol environ, de préférence d'au moins 50 000 g/mol environ, et de préférence encore d'au moins 100 000 g/mol environ. La macromolécule organique de l'invention n'induit pas la précipitation des NP.

Une macromolécule organique de la présente invention peut résulter de processus biologiques ou bien être préparée à l'aide de réactions chimiques.

Les protéines (i.e. polypeptides) résultent de la condensation d'acides aminés par formation de liaisons peptidiques.

A titre d'exemple de protéine, on peut citer la gélatine.

La gélatine est un produit de dégradation du collagène, elle est par essence hétérogène et se compose donc d'un ensemble de molécules organiques. Sa masse molaire est par conséquent une masse molaire moyenne.

Les polysaccharides sont des polymères constitués de plusieurs oses liés entre eux par des liaisons O-osidiques.

Les polysaccharides peuvent être choisis parmi le chitosane, la chitine, la cellulose, la cellophane, l'agar-agar, l'amidon, la gomme arabique ou un de leurs mélanges.

Les polymères synthétiques résultent de l'enchaînement covalent d'un grand nombre de motifs monomères identiques ou différents par polymérisation desdits motifs.

Les polymères synthétiques peuvent être choisis parmi les alcools polyvinyliques (PVA), les polyélectrolytes, les résines époxydes, les polydiméthylsiloxanes (PDMS), les polyméthacrylates de méthyle (PMMA), les polyvinylpyrrolidones (PVP), les polyéthylènes glycols, les polystyrènes, les polyéthylènes, les polypropylènes, les polychlorures de vinyle, les polyamides, les polyesters, les poly(*N*-isopropylacrylamides) et un de leurs mélanges, et de préférence choisis parmi les alcools polyvinyliques (PVA), les polyméthacrylates de méthyle (PMMA), les polyvinylpyrrolidones (PVP), les polyéthylènes glycols, les polystyrènes, les polyéthylènes, les polypropylènes, les polychlorures de vinyle, les polyamides, les polyesters, les poly(*N-*isopropylacrylamides) et un de leurs mélanges.

Les polymères synthétiques, et en particulier l'alcool polyvinylique, sont préférés.

Dans un mode de réalisation particulier, la macromolécule organique est une protéine telle que la gélatine ou un polymère synthétique tel que l'alcool polyvinylique.

Dans la présente invention, la concentration molaire en macromolécule dans le mélange de l'étape i) correspond à la concentration molaire du monomère de la macromolécule dans le mélange de l'étape i).

A titre d'exemple, lorsque l'alcool polyvinylique est utilisé, on calcule sa concentration en mesurant la concentration du monomère dans le mélange, c'est-à-dire la concentration de l'alcool vinylique (de formule brute C₂H₄O) dans le mélange.

Le film peut présenter une épaisseur E allant de 10 µm environ à 10 mm environ, et de préférence de 0,5 à 3 mm environ.

L'épaisseur E du film est de préférence sensiblement constante.

Dans l'invention, l'expression « épaisseur sensiblement constante » signifie qu'il peut y avoir une variation d'épaisseur du film d'au plus 30% environ de l'épaisseur minimale, et de préférence d'au plus 20% environ de l'épaisseur minimale.

Le support est de préférence un support plan. De ce fait, il permet au cours de l'étape ii) de faciliter la formation d'un film d'épaisseur E sensiblement constante déposé sur ledit support plan.

Le support est de préférence un substrat transparent ou translucide.

Le substrat transparent ou translucide peut être en verre, en vitro-céramique, en céramique, en matière plastique ou en papier cellulosique.

Dans l'invention, l'expression « substrat transparent ou translucide » signifie un substrat transparent à la lumière visible ou un substrat ne transmettant qu'une partie de cette lumière visible. Un substrat est dit transparent quand son coefficient de transmission optique est compris entre 80% et 100% mesuré par un spectromètre UV-visible conventionnel. Un substrat est dit translucide quand son coefficient de transmission optique est compris entre 10% et 80% mesuré par un spectromètre UV-visible conventionnel.

Le mélange de l'étape i) peut comprendre des additifs tels que des plastifiants, des agents filmogènes ou des surfactants, lesdits additifs n'entraînant pas, seuls ou en mélange avec d'autres éléments, la précipitation des NP.

La suspension colloïdale S₀ de l'étape i) peut être une suspension colloïdale aqueuse ou une suspension colloïdale organique. Une suspension colloïdale aqueuse est préférée, en particulier de l'eau distillée ou de l'eau distillée ultrapure.

Lorsque S₀ est une suspension colloïdale aqueuse, elle comprend de préférence au moins 80% en volume environ d'eau, et de préférence encore au moins 90% en volume environ d'eau, par rapport au volume total de liquide dans la suspension colloïdale S₀.

Lorsque S₀ est une suspension colloïdale organique, elle comprend de préférence au moins 80% en volume environ d'un solvant organique, et de préférence encore au moins 90% en volume environ d'un solvant organique, par rapport au volume total de liquide dans la suspension colloïdale S₀.

Le solvant organique peut être du toluène, du benzène ou un alcool.

La suspension colloïdale S₀ de l'étape i) peut comprendre de 10⁻⁴ à 5x10⁻¹ mol/l, environ, et de préférence de 2x10⁻⁴ à 5x10⁻³ mol/l environ d'or.

La suspension colloïdale S₀ telle que décrite dans l'invention présente des propriétés bichromatiques, et est donc une suspension colloïdale bichromatique.

Selon un premier mode de réalisation, les NP de la suspension colloïdale S₀ sont uniquement constituées d'or.

Selon un deuxième mode de réalisation, les NP de la suspension colloïdale S₀ sont constituées d'or et d'un métal noble choisi parmi l'argent, le palladium, le cuivre et le platine.

Selon ce deuxième mode de réalisation, les NP peuvent être sous la forme de nanoparticules monodisperses d'un alliage or/métal noble ou sous la forme de nanoparticules monodisperses dites « cœur/coquille » et constituées d'un cœur en métal noble et d'une coquille en or.

Selon ce deuxième mode de réalisation, la concentration molaire en métal noble choisi parmi l'argent, le palladium, le cuivre et le platine dans le mélange de l'étape i) va de 10⁻⁴ à 5x10⁻¹ mol/l environ, et de préférence de 2x10⁻⁴ à 5x10⁻³ mol/l environ.

Selon ce deuxième mode de réalisation, le rapport molaire R = concentration en or (en mol/l)/concentration en métal noble (en mol/l) dans le mélange de l'étape i) va de de 1 à 1000 environ, et de préférence de 1 à 20 environ.

Lorsque les nanoparticules monodisperses sont sous la forme « cœur/coquille », le diamètre du cœur en métal noble est de préférence d'au plus 50 nm environ.

Le procédé de l'invention peut comprendre en outre entre l'étape i) et l'étape ii), une étape i-1) d'application du mélange de l'étape i) sur un support tel que défini dans l'invention.

Ce mode de réalisation est particulièrement adapté lorsque l'étape i) est effectuée dans un contenant qui ne sert pas de support lors de l'étape ii), notamment lorsqu'il n'est pas adapté pour pouvoir être utilisé comme support pour le séchage de l'étape ii) (e.g. ballon de réaction).

Ainsi, après séchage du mélange selon l'étape ii), un film dudit matériau bichromatique déposé sur ledit support est obtenu.

Cette étape d'application peut être réalisée à l'aide d'un pinceau ou par pulvérisation, notamment à l'aide d'un pistolet à air comprimé.

Les étapes i-1) et ii) peuvent être réitérées plusieurs fois, de manière à former plusieurs couches de film déposées sur ledit support.

Après l'étape ii), le procédé peut comprendre en outre une étape ii-1) de dépôt d'un substrat transparent ou translucide à titre de support sur le film bichromatique obtenu à l'étape ii). On obtient alors un substrat transparent déposé sur un film bichromatique, lui-même déposé sur un support.

Puis, les étapes i-1), ii) et ii-1) peuvent être réitérées plusieurs fois, de manière à former plusieurs couches de [substrat transparent/film bichromatique] déposées sur ledit support.

Selon un mode de réalisation préféré de l'invention, l'étape i) est réalisée en mélangeant dans un contenant (e.g. cristallisoir) comprenant au moins une surface intérieure apte à recevoir ledit mélange :
* ladite suspension colloïdale S₀ comprenant des NP, ladite suspension colloïdale S₀ comprenant de 10⁻⁴ à 5x10⁻¹ mol/l environ, et de préférence de 2x10⁻⁴ à 5x10⁻³ mol/l environ d'or, avec
* une solution S₀' comprenant au moins une macromolécule organique telle que définie dans la présente invention, ladite solution S₀' comprenant de 10⁻³ mol/l à 5 mol/l environ, et de préférence de 5x10⁻³ à 2 mol/l environ de macromolécule organique,
étant entendu que :
- le rapport volumique : volume de la suspension colloïdale S₀/volume de la solution S₀' va de 0,1 à 100 environ, et de préférence de 0,5 à 5 environ, et
- la solution ou suspension colloïdale résultante (i.e. le mélange) présente une hauteur H dans le contenant allant de 0,1 à 30 mm environ, et de préférence de 0,8 à 20 mm environ.

Dans un mode de réalisation préféré, la surface intérieure dudit contenant joue le rôle du support de l'étape ii) [i.e. étapes i) et i-1) concomitantes] et l'étape ii) est réalisé en séchant directement ledit contenant comprenant ledit mélange. Un film dudit matériau bichromatique déposé sur ladite surface intérieure du contenant est ainsi obtenu.

La solution S₀' peut être une solution aqueuse ou une solution organique. Une solution aqueuse est préférée, en particulier de l'eau distillée ou de l'eau distillée ultrapure.

Lorsque S₀' est une solution aqueuse, elle comprend de préférence au moins 80% en volume environ d'eau, et de préférence encore au moins 90% en volume environ d'eau, par rapport au volume total de liquide dans la solution S₀'.

Lorsque S₀' est une solution organique, elle comprend de préférence au moins 80% en volume environ d'un solvant organique, et de préférence encore au moins 90% en volume environ d'un solvant organique, par rapport au volume total de liquide dans la solution S₀'.

Le solvant organique peut être du dichlorométhane ou un alcool.

Ce mode de réalisation est particulièrement adapté lorsque S₀ est une suspension colloïdale aqueuse et S₀' est une solution aqueuse (e.g. 100% d'eau distillée éventuellement ultrapure) et la macromolécule organique est soluble dans S₀ et S₀'.

Toutefois, il peut être adapté par des techniques bien connues de l'homme du métier (e.g. étapes de transferts de phase) pour être utilisé lorsque S₀ est une suspension colloïdale aqueuse, S₀' est une solution organique et la macromolécule organique n'est pas soluble dans S₀. Le transfert de phase peut comprendre la mise en contact de la suspension colloïdale aqueuse S₀ avec la solution organique S₀' puis l'agitation mécanique du mélange résultant ou l'utilisation d'ultrasons sur ledit mélange résultant. Les NP migrent de la phase aqueuse vers la phase organique si l'agent stabilisant le permet.

Dans la présente invention, la concentration molaire en macromolécule dans la solution S₀' correspond à la concentration molaire du monomère de la macromolécule dans la solution S₀'.

A titre d'exemple, lorsque l'alcool polyvinylique est utilisé, on calcule sa concentration en mesurant la concentration du monomère dans la solution S₀', c'est-à-dire la concentration de l'alcool vinylique (de formule brute C₂H₄O) dans la solution S₀'.

L'étape ii) peut être effectuée à une température allant de 50°C à 150°C environ, et de préférence allant de 60°C à 80°C environ, notamment dans une étuve.

L'étape ii) permet d'évaporer les solvants utilisés lors de l'étape i). Cette étape de séchage peut également permettre la polymérisation et éventuellement la réticulation de la macromolécule organique.

L'étape ii) peut durer de 30 min à 24 h environ, et de préférence de 3 h à 8 h environ.

Le procédé peut comprendre en outre après l'étape ii), une étape iii) de traitement thermique à une température allant de de 20 à 200°C environ, et de préférence allant de 60°C à 120°C, par exemple dans une étuve.

L'étape iii) peut permettre de terminer la polymérisation et éventuellement la réticulation suite à l'étape de séchage ii) selon la macromolécule organique utilisée.

Le procédé peut comprendre en outre après l'étape ii) ou après l'étape iii), une étape iv) au cours de laquelle le film de matériau bichromatique est enlevé ou décollé dudit support.

Le procédé de l'invention permet d'obtenir un matériau bichromatique, sous la forme d'un film translucide, comprenant des NP et au moins une macromolécule organique, lesdites NP étant stables dans ladite macromolécule organique. De ce fait, le film est homogène et les NP sont uniformément réparties dans ledit film. L'effet bichromatique est également stable dans le temps. En outre, le procédé de l'invention évite la précipitation des NP lors des étapes i), i-1), ii), iii) et iv) et ainsi leur agglomération pouvant engendrer la perte de l'effet bichromatique.

Le matériau bichromatique sous la forme d'un film translucide est de préférence uniquement constitué des NP et d'une ou plusieurs macromolécule(s) organique(s) afin d'éviter la présence d'éléments qui pourraient diminuer ou annuler l'effet bichromatique souhaité.

Selon une forme de réalisation particulièrement préférée de l'invention, la suspension colloïdale S₀ telle que définie dans l'invention (i.e. comprenant les NP sous forme sphérique et présentent un diamètre allant de 70 à 100 nm environ, et de préférence allant de 75 à 90 nm environ), est préalablement préparée selon les étapes suivantes :
A) une étape de préparation d'une suspension colloïdale comprenant des germes d'un métal choisi parmi l'or, le platine, le palladium, le cuivre et l'argent, et de préférence choisi parmi l'or, le platine, l'argent et le cuivre, lesdits germes de métal étant sous forme sphérique et présentant un diamètre allant de 1 à 30 nm environ, et de préférence de 1 à 15 nm environ, ladite suspension colloïdale aqueuse comprenant une concentration molaire en métal allant de 5x10⁻⁵ à 10⁻² mol/l, environ, et de préférence allant de 1x10⁻⁴ à 2x10⁻³ mol/l environ, et
B) une étape de préparation d'une suspension colloïdale S₀ telle que définie dans la présente invention, à partir de la suspension colloïdale comprenant des germes de l'étape A).

Ce procédé permet plus particulièrement d'obtenir des nanoparticules sous forme « cœur/coquille » lorsque les germes sont des germes d'un métal choisi parmi le platine, le palladium, le cuivre et l'argent, et de préférence choisi parmi le platine, le cuivre et l'argent.

L'étape A) peut être effectuée par la méthode de Turkevich-Frens précitée, par radiolyse ou par irradiation, notamment selon des techniques bien connues de l'homme du métier [Abidi et al., Light-driven reactions and materials in the environmental technology, 2010, 4, 3, 170-188 ; Abidi et al., J. Phys. Chem. C, 2010, 114, 35, 14794-14803 ; Singh et al., J. Phys. Chem. Lett., 2013, 4, 3958-3961].

La suspension colloïdale de l'étape A) peut être une suspension colloïdale aqueuse ou une suspension colloïdale organique. Une suspension colloïdale aqueuse est préférée, en particulier de l'eau distillée ou de l'eau distillée ultrapure.

Lorsque la suspension colloïdale de l'étape A) est une suspension colloïdale aqueuse, elle comprend de préférence au moins 80% en volume environ d'eau, et de préférence encore au moins 90% en volume environ d'eau, par rapport au volume total de liquide dans ladite suspension colloïdale.

Lorsque la suspension colloïdale de l'étape A) est une suspension colloïdale organique, elle comprend de préférence au moins 80% en volume environ d'un solvant organique, et de préférence encore au moins 90% en volume environ d'un solvant organique, par rapport au volume total de liquide dans ladite suspension colloïdale.

Le solvant organique peut être du toluène, du benzène ou un alcool.

Selon une forme de réalisation particulièrement préférée de l'invention, les germes sont des germes d'or et l'étape A) comprend :
- une sous-étape A₁) de chauffage à la température d'ébullition d'une solution S₁ comprenant au moins un sel d'or dans lequel l'or est à l'état d'oxydation (+III) ou (+I), la concentration molaire en ion or [Au³⁺] ou [Au⁺] dans ladite solution aqueuse S₁ allant de 5x10⁻⁵ à 10⁻² mol/l, environ, et allant de préférence de 1x10⁻⁴ à 2x10⁻³ mol/l environ,
- une sous-étape A₂) de mélange de la solution S₁ de la sous-étape A₁) avec une solution S₂ comprenant au moins un agent réducteur et éventuellement un agent stabilisant, la concentration molaire en agent réducteur dans ladite solution S₂ [Agent réducteur] allant de 5x10⁻⁵ mol/l environ à 5x10⁻¹ mol/l environ, et de préférence allant de 5x10⁻³ mol/l environ à 2x10⁻¹ mol/l environ, étant entendu que le rapport molaire : nombre de moles d'agent réducteur / nombre de moles d'ion or Au³⁺ ou Au⁺ va de 0,1 à 20 environ, et de préférence de 0,2 à 10 environ,
- une sous-étape A₃) de maintien du chauffage à la température d'ébullition du mélange de la sous-étape A₂) jusqu'à la réduction complète de l'or (III) ou l'or (I) en or (0), et
- une sous-étape A₄) de refroidissement à température ambiante afin d'obtenir une suspension colloïdale comprenant des germes telle que définie dans la présente invention.

Lorsque l'or est à l'état d'oxydation (+III), le sel d'or peut être choisi parmi l'acide tétrachloroaurique HAuCl4, le tétrachloroaurate de potassium KAuCl₄ et leur mélange.

Lorsque l'or est à l'état d'oxydation (+I), le sel d'or peut être du cyanure d'or.

Un sel dans lequel l'or est à l'étape d'oxydation (+III) est préféré.

L'agent réducteur peut être choisi parmi le citrate de sodium, le borohydrure de sodium, l'hydrazine, l'hydroquinone et un de leurs mélanges.

Lorsque l'agent réducteur a des propriétés stabilisantes ou surfactantes, comme c'est le cas du citrate de sodium, la solution S₂ ne comprend pas d'agent stabilisant supplémentaire.

Lorsque l'agent réducteur n'a pas de propriétés stabilisantes ou surfactantes, la solution S₂ comprend un agent stabilisant.

L'agent stabilisant peut être choisi parmi les polymères tels que l'alcool polyvinylique ou l'acide polyacrylique, le poly(éthylèneglycol) (PEG), les dérivés soufrés tels que les thiols, les ligands à base de triphénylphosphine, les dendrimères, les tensioactifs tels que le bromure de cétyltriméthylammonium (CTAB), le dodécylsulfate de sodium (SDS) ou les tensioactifs aminés.

La concentration en agent stabilisant dans ladite solution S₂ peut aller de 10⁻³ mol/l environ à 5x10⁻¹ mol/l environ, et de préférence de 2x10⁻³ mol/l environ à 10⁻² mol/l environ.

La solution S₁ (respectivement S₂) peut être une solution aqueuse ou une solution organique. Une solution aqueuse est préférée, en particulier de l'eau distillée ou de l'eau distillée ultrapure.

Lorsque S₁ (respectivement S₂) est une solution aqueuse, elle comprend de préférence au moins 80% en volume environ d'eau, et de préférence encore au moins 90% en volume environ d'eau, par rapport au volume total de liquide dans ladite solution S₁ (respectivement S₂).

Lorsque S₁ (respectivement S₂) est une solution organique, elle comprend de préférence au moins 80% en volume environ d'un solvant organique, et de préférence encore au moins 90% en volume environ d'un solvant organique, par rapport au volume total de liquide dans ladite solution S₁ (respectivement S₂).

Le solvant organique peut être du toluène, du benzène ou un alcool.

Dans la présente invention, la résistivité de l'eau ultrapure est de préférence d'au moins 10MΩ.cm, telle que mesurée par un générateur d'eau MilliQ à 25°C (purificateurs d'eau vendus par la société Merck-Millipore).

L'étape B) permet à partir des germes de l'étape A) de former des NP en suspension colloïdale sous forme sphérique et présentant un diamètre allant de 70 à 100 nm environ, et de préférence allant de 75 à 90 nm environ (i.e. de former une suspension colloïdale S₀ telle que définie dans la présente invention).

Les NP en suspension colloïdale (i.e. suspension colloïdale S₀) à l'issue de l'étape B) ne peuvent pas être conservées sous forme de poudre, elles sont nécessairement conservées en suspension colloïdale.

Il n'est pas nécessaire d'éliminer les sous-produits, l'agent réducteur et l'agent stabilisant avant l'étape i). Ces composés peuvent être présents dans le matériau bichromatique de l'invention puisqu'ils n'altèrent pas les propriétés optiques dudit film.

Il convient de noter qu'il n'est pas possible de former directement au cours de l'étape A) des NP sous forme sphérique et présentant un diamètre allant de 70 à 100 nm environ, et de préférence allant de 75 à 90 nm environ.

En effet, les méthodes de synthèse connues de l'homme du métier bien que permettant de former des particules sous forme sphérique et présentant un diamètre allant de 70 à 100 nm environ (cf. méthode de Turkevich-Frens précitée), ne peuvent pas conduire à des particules monodisperses. En effet, la préparation en une seule étape de nanoparticules d'or de diamètre supérieur à 30 nm conduit à des nanoparticules polydisperses, induisant une altération de l'effet bichromatique du matériau final obtenu.

Selon une forme de réalisation particulièrement préférée de l'invention, les germes sont des germes d'or et l'étape B) comprend :
- une sous-étape B₁) de chauffage à la température d'ébullition d'une solution S₃ comprenant au moins un sel d'or dans lequel l'or est à l'état d'oxydation (+III) ou (+I), la concentration en ion or [Au³⁺] ou [Au⁺] dans ladite solution S₃ allant de 10⁻⁴ mol/l environ à 0,1 mol/l environ, et de préférence allant de 5x10⁻⁴ mol/l environ à 10⁻² mol/l environ,
- une sous-étape B₂) de mélange de la solution S₃ de la sous-étape B₁) avec la suspension colloïdale comprenant des germes telle qu'obtenue à l'étape A) ou à la sous-étape A₄), étant entendu que le rapport molaire défini par le nombre de moles d'ion or Au³⁺ ou Au⁺ de la solution S₃/le nombre de moles d'or Au⁰ de la suspension colloïdale de germes d'or va de 5 à 1000 environ, et de préférence de 10 à 100 environ,
- une sous-étape B₃) de mélange d'une solution S₄ comprenant au moins un agent réducteur et éventuellement un agent stabilisant avec le mélange de la sous-étape B₂), la concentration en agent réducteur dans ladite solution S₄ [Agent réducteur] allant de 2x10⁻⁵ mol/l environ à 2 mol/l environ, et de préférence allant de 10⁻⁴ mol/l environ à 0,7 mol/l, étant entendu que le rapport molaire : nombre de moles d'agent réducteur / nombre de moles d'ion or Au³⁺ ou Au⁺ va de 0,1 à 10 environ, et de préférence de 0,1 à 3 environ,
- une sous-étape B₄) de maintien du chauffage à la température d'ébullition du mélange de la sous-étape B₃) jusqu'à la réduction complète de l'or (III) ou l'or (I) en or (0), et
- une sous-étape B₅) de refroidissement à température ambiante afin d'obtenir une suspension colloïdale S₀ telle que définie dans la présente invention.

Le sel d'or et l'agent réducteur sont tels que définis précédemment.

La concentration en agent stabilisant dans ladite solution S₄ peut aller de 10⁻³ mol/l environ à 1 mol/l environ, et de préférence de 2x10⁻³ mol/l environ à 0,1 mol/l environ.

La solution S₃ (respectivement S₄) peut être une solution aqueuse ou une solution organique. Une solution aqueuse est préférée, en particulier de l'eau distillée ou de l'eau distillée ultrapure.

Lorsque S₃ (respectivement S₄) est une solution aqueuse, elle comprend de préférence au moins 80% en volume environ d'eau, et de préférence encore au moins 90% en volume environ d'eau, par rapport au volume total de liquide dans ladite solution S₃ (respectivement S₄).

Lorsque S₃ (respectivement S₄) est une solution organique, elle comprend de préférence au moins 80% en volume environ d'un solvant organique, et de préférence encore au moins 90% en volume environ d'un solvant organique, par rapport au volume total de liquide dans ladite solution S₃ (respectivement S₄).

Le solvant organique peut être du toluène, du dichlorométhane, du benzène ou un alcool.

Le matériau bichromatique sous forme de film obtenu par le procédé conforme au premier objet de l'invention peut être appliqué sur tout type de substrat transparent ou translucide tel que des emballages plastiques, des flacons, notamment en verre, du papier cellulosique, etc...

Selon une première variante, le support de l'étape ii) est un substrat transparent ou translucide. Dans ce cas, l'ensemble obtenu (film bichromatique + substrat) présente un effet bichromatique et peut être directement utilisé dans les applications telles que définies dans la présente invention.

Selon une deuxième variante, le support de l'étape ii) n'est pas un substrat transparent ou translucide. Dans ce cas, le procédé comprend en outre après l'étape iv), une étape v) d'application du film bichromatique sur un substrat transparent ou translucide.

Cette étape v) peut être effectuée par collage, notamment à l'aide d'un adhésif.

Le substrat transparent ou translucide peut être en verre, en vitro-céramique, en céramique, en matière plastique ou en papier cellulosique. L'invention a donc pour deuxième objet un matériau bichromatique sous la forme d'un film translucide ledit film translucide étant un film présentant un coefficient de transmission optique allant de 10% à 80%, mesuré par un spectromètre UV-visible à une longueur d'onde de 490 nm, tel qu'obtenu selon le procédé conforme au premier objet, ledit matériau bichromatique comprenant des NP et au moins une macromolécule organique choisie parmi les protéines, les polysaccharides et les polymères synthétiques, ledit matériau étant caractérisé en ce qu'il présente deux couleurs complémentaires distinctes à l'œil nu, une couleur en transmission et une couleur en rétrodiffusion et en ce que :
* les NP sont sous forme sphérique et présentent un diamètre allant de 70 à 100 nm environ, et de préférence allant de 75 à 90 nm environ, les NP étant monodisperses, elles sont définies par un diamètre d = d₀ +/- ε, avec ε < 0,2xd₀,
* ledit film présente une densité volumique allant de 0,5x10¹⁰ à 5,0x10¹⁰ de NP/cm³ environ pour 1 mm d'épaisseur E de film, et de préférence de 1,0x10¹⁰ à 3,0x10¹⁰ de NP/cm³ environ pour 1 mm d'épaisseur E de film.

Le matériau de l'invention est un film homogène dans lequel les NP sont uniformément réparties. L'effet bichromatique est stable dans le temps.

Le film peut présenter une épaisseur E allant de 10 µm environ à 10 mm environ, et de préférence de 0,5 à 3 mm environ.

Il convient de noter que lorsque le film présente une épaisseur de 100 µm, soit une épaisseur dix fois plus faible que si son épaisseur était de 1 mm, sa densité volumique est dix fois plus élevée pour obtenir le même effet bichromatique, soit une densité allant de 0,5x10¹¹ à 5,0x10¹¹ de NP/cm³ environ pour 100 µm d'épaisseur E de film, et de préférence de 1,0x10¹¹ à 3,0x10¹¹ de NP/cm³ environ pour 100 µm d'épaisseur E de film. En d'autres termes, le film présente une densité volumique D_{V} variant de D_{V1} = (0,5x10¹⁰)/E NP/cm³ environ à D_{V2} = (5,0x10¹⁰)/E NP/cm³ environ, et de préférence variant de D_{V1'} = (1,0x10¹⁰)/E NP/cm³ environ à D_{V2'} = (3,0x10¹⁰)/E NP/cm³ environ, E étant l'épaisseur du film en mm.

L'épaisseur E du film est de préférence sensiblement constante.

L'invention a pour troisième objet l'utilisation d'un matériau bichromatique sous la forme d'un film translucide tel qu'obtenu selon le procédé conforme au premier objet de l'invention ou conforme au deuxième objet de l'invention pour revêtir un substrat transparent ou translucide.

Le substrat transparent ou translucide peut être en verre, en vitro-céramique, en céramique, en papier cellulosique ou en matière plastique.

L'invention a pour quatrième objet l'utilisation d'un matériau bichromatique sous la forme d'un film translucide tel qu'obtenu selon le procédé conforme au premier objet de l'invention ou conforme au deuxième objet de l'invention comme moyen d'authentification (e.g. signature particulière, marquage évident ou marquage non évident), de décoration ou de protection.

Comme moyen d'authentification, il peut être utilisé :
- pour marquer des emballages dans le domaine de l'agroalimentaire, notamment lorsque le substrat est en plastique, ou
- pour résoudre des problèmes de falsification et de contrefaçon de pièces de paiement et de documents officiels puisque aucun système de photocopie ne permet la reproduction des effets bichromatiques dudit matériau, par exemple en marquant des papiers de sécurité.

Comme moyen de protection, le matériau bichromatique de l'invention peut s'avérer utile pour revêtir des fenêtres de maisons ou de voitures dans les pays chauds, de façon à ce qu'ils réfléchissent la chaleur tout en laissant passer la lumière à travers le verre, réduisant ainsi le besoin en climatisation.

Il peut également être utilisé pour revêtir des lunettes de protection solaire ou des lunettes correctives.

Il peut être envisagé pour des écrans ou filtres de protection laser.

Comme moyen de décoration, le matériau bichromatique de l'invention peut également être utilisé dans le domaine du luxe, notamment pour décorer des flacons de parfum, des flacons de lotions cosmétiques ou des bijoux ; ou dans le domaine de la grande distribution pour décorer tout type d'objet transparent ou translucide, tels que des vases, des luminaires, etc...

### EXEMPLES

Les matières premières utilisées dans les exemples sont listées ci-après :
- tétrachloroaurate de potassium KAuCl₄, de pureté 99,995%, Sigma-Aldrich,
- eau distillée ultrapure, Milli-Q, de résistivité 18,2 MΩ.cm, Merck Millipore,
- tricitrate de sodium dihydraté, de pureté 99%, Sigma-Aldrich,
- alcool polyvinylique, de pureté 99%, de masse molaire 86000 g/mol, Sigma-Aldrich,
- poudre de gélatine, 24350.262, VWR, Prolabo.

Sauf indications contraires, tous les matériaux ont été utilisés tels que reçus des fabricants.

### EXEMPLE 1

### Fabrication d'un matériau bichromatique conforme à l'invention et tel qu'obtenu selon le procédé conforme à l'invention

### 1.1 Préparation de la suspension colloïdale aqueuse de germes d'or [étape A) du procédé conforme à l'invention]

Une solution aqueuse comprenant 9,45 mg de tétrachloroaurate de potassium dans 100 ml d'eau distillée ultrapure a été préparée et portée à ébullition. La concentration en ion or [Au³⁺] dans ladite solution aqueuse était de 0,25 mmol/l.

Une solution aqueuse comprenant 100 mg de tricitrate de sodium dans 10 ml d'eau distillée ultrapure a été préparée. La concentration en tricitrate de sodium dans ladite solution aqueuse était de 34 mmol/l.

5 mL de la solution aqueuse de citrate de sodium ont été ajoutés aux 100 ml de solution aqueuse de tétrachloroaurate.

Le mélange résultant a été maintenu à ébullition jusqu'à la réduction complète de l'or (III) en or (0) (la solution devient rouge), puis il a été refroidi à température ambiante.

Une suspension colloïdale aqueuse de germes d'or sous forme sphérique et présentant un diamètre de 15 nm environ a été obtenue et comprenait 2,4x10⁻⁴ mol/l d'or.

La figure la montre les germes d'or obtenus à l'issue de l'étape A) par microscopie électronique à transmission (MET). Ils présentent un diamètre de 15 nm environ.

Les images obtenues par microscopie électronique en transmission dans la présente invention ont été effectuées à l'aide d'un microscope vendu sous la dénomination commerciale 100 CX II par la société JEOL.

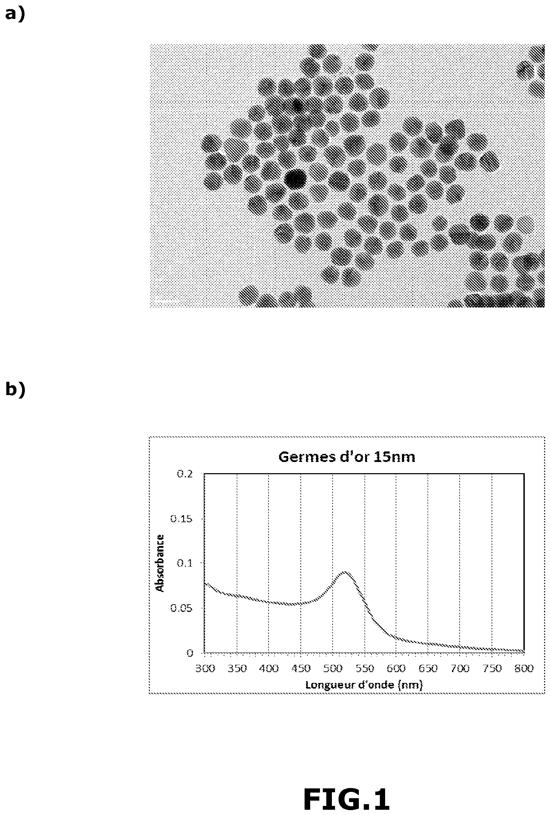

La Figure 1b montre un spectre UV-visible d'absorption d'une telle suspension colloïdale, obtenue à travers une cuve de 1 mm d'épaisseur. Ce spectre a été obtenu avec un spectromètre CARY 5000 de la société Agilent.

### 1.2 Préparation de la suspension colloïdale aqueuse de nanoparticules d'or [étape B) du procédé conforme à l'invention]

Une solution aqueuse comprenant 3,78 mg de tétrachloroaurate de potassium dans 10 ml d'eau distillée ultrapure a été préparée et portée à ébullition. La concentration en ion or [Au³⁺] dans ladite solution aqueuse était de 1 mmol/l.

1 ml de la suspension colloïdale aqueuse de germes d'or telle que préparée à l'exemple 1.1 ci-dessus a été ajoutée à la solution aqueuse de tétrachloroaurate.

Le rapport molaire nombre de moles d'ion or Au³⁺ de la solution aqueuse /nombre de moles d'or Au⁰ de la solution aqueuse de germes d'or était de 41,7.

150 µL de la solution aqueuse de citrate de sodium précédemment préparée à l'exemple 1.1 ont été ajoutés à la solution aqueuse de tétrachloroaurate et de germes d'or.

Le mélange résultant a été maintenu à ébullition jusqu'à la réduction complète de l'or (III) en or (0) (la solution devient brune/violette), puis il a été refroidi à température ambiante.

Une suspension colloïdale aqueuse de nanoparticules d'or monodisperses sous forme sphérique et présentant un diamètre de 85 nm environ a été obtenue et comprenait 0,92 mmol/l d'or.

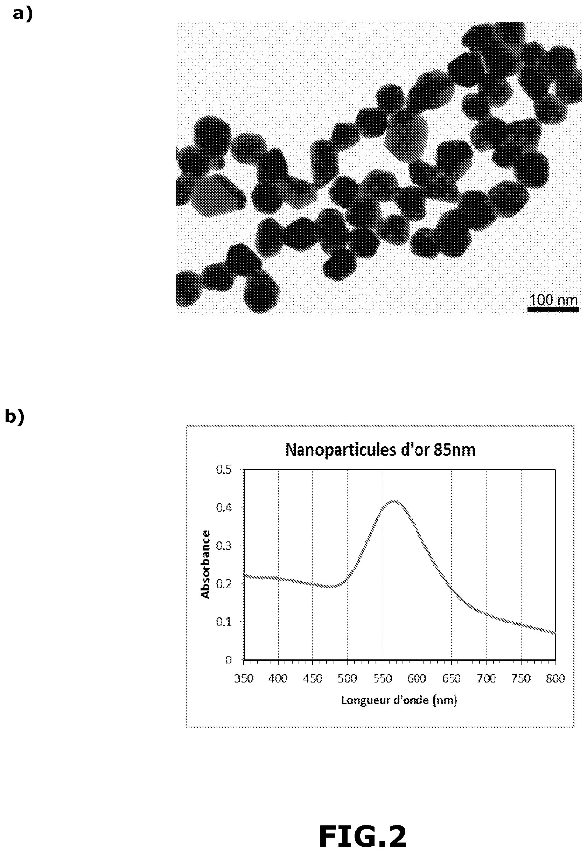

La figure 2a montre les nanoparticules d'or obtenues à l'issue de l'étape B) par microscopie électronique en transmission (MET).
La figure 2b montre un spectre UV-visible de ces NP. Elles présentent un diamètre de 85 nm environ.

### 1.3 Préparation d'un matériau bichromatique conforme à l'invention

Une solution aqueuse comprenant 4,4 g d'alcool polyvinylique PVA dans 100 ml d'eau distillée ultrapure a été préparée.

La concentration molaire en PVA dans la solution aqueuse était de 1 mol/l.

Puis, dans un cristallisoir de diamètre 3 cm, 2 ml de la suspension colloïdale aqueuse de nanoparticules d'or telle que préparée à l'exemple 1.2 ci-dessus a été mélangé avec 3 ml de ladite solution aqueuse de PVA. La hauteur H de la suspension colloïdale résultante dans le cristallisoir était de 8 mm.

La concentration en or dans le mélange était de 0,37 mmol/l.

La concentration molaire en PVA dans le mélange était de 0,6 mol/l.

Puis le mélange a été placé dans une étuve à 70°C jusqu'à évaporation complète de l'eau (10 heures environ).

Le film obtenu présentait une épaisseur E de 90 µm environ.

Le film présentait une densité volumique de 1,2x10¹¹ NP/cm³ pour 90 µm d'épaisseur E de film, ce qui correspond à une densité volumique de 1,08x10¹⁰ NP/cm³ pour 1 mm d'épaisseur E de film.

Le film obtenu présentait un coefficient de transmission optique de 32% environ, mesuré par un spectromètre UV-visible conventionnel à 490 nm.

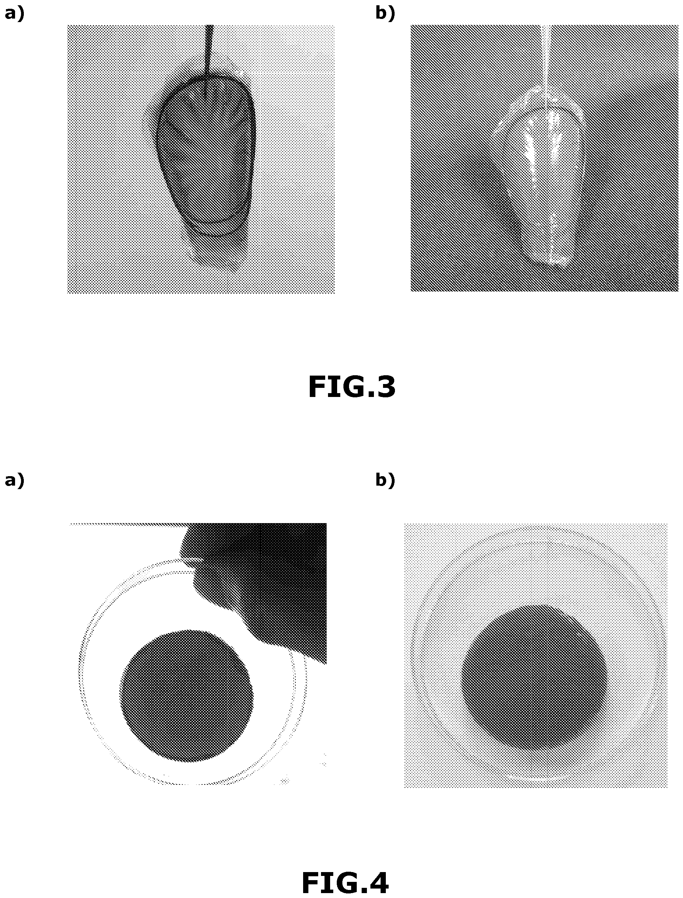

La figure 3 montre le film qui est de couleur bleu en transmission (figure 3a) et orange en rétrodiffusion (figure 3b).

### EXEMPLE 2

### Fabrication d'un matériau bichromatique conforme à l'invention et tel qu'obtenu selon le procédé conforme à l'invention

Une solution aqueuse comprenant 10 g de gélatine dans 20 ml d'eau distillée ultrapure a été préparée.

Puis, dans un cristallisoir de diamètre 3 cm, 3 ml de la suspension colloïdale aqueuse de nanoparticules d'or telle que préparée à l'exemple 1.2 ci-dessus a été mélangé avec 2 ml de ladite solution aqueuse de gélatine. La hauteur H de la suspension colloïdale résultante dans le cristallisoir était de 5 mm.

La concentration en or dans le mélange était de 0,37 de mmol/l.

Puis le mélange a été placé dans une étuve à 70°C jusqu'à évaporation complète de l'eau (10 heures environ).

Le film obtenu présentait une épaisseur E de 2 mm environ.

Le film présentait une densité volumique de 1,1x10¹⁰ NP/cm³ pour 2 mm d'épaisseur E de film, ce qui correspond à une densité volumique de 2,2x10¹⁰ NP/cm³ pour 1 mm d'épaisseur E de film.

Le film obtenu présentait un coefficient de transmission optique de 20% environ, mesuré par un spectromètre UV-visible conventionnel à 490 nm.

La figure 4 montre le film qui est de couleur bleu en transmission (figure 4a) et orange en rétrodiffusion (figure 4b).

### EXEMPLE 3 COMPARATIF

### Fabrication d'un matériau non conforme à l'invention

Une solution aqueuse comprenant 6,8 mg de tétrachloroaurate de potassium dans 20 ml d'eau distillée ultrapure a été préparée et portée à ébullition. La concentration en ion or [Au³⁺] dans ladite solution aqueuse était de 0,9 mmol/l.

Une solution aqueuse comprenant 100 mg de tricitrate de sodium dans 10 ml d'eau distillée ultrapure a été préparée. La concentration en tricitrate de sodium dans ladite solution aqueuse était de 34 mmol/l.

0,8 ml de la solution aqueuse de citrate de sodium ont été ajoutés aux 20 ml de solution aqueuse de tétrachloroaurate.

Le mélange résultant a été maintenu à ébullition jusqu'à la réduction complète de l'or (III) en or (0) (la solution devient brun-rouge), puis il a été refroidi à température ambiante.

Une suspension colloïdale aqueuse de nanoparticules d'or a été obtenue et comprenait 0,86 mmol/l d'or.

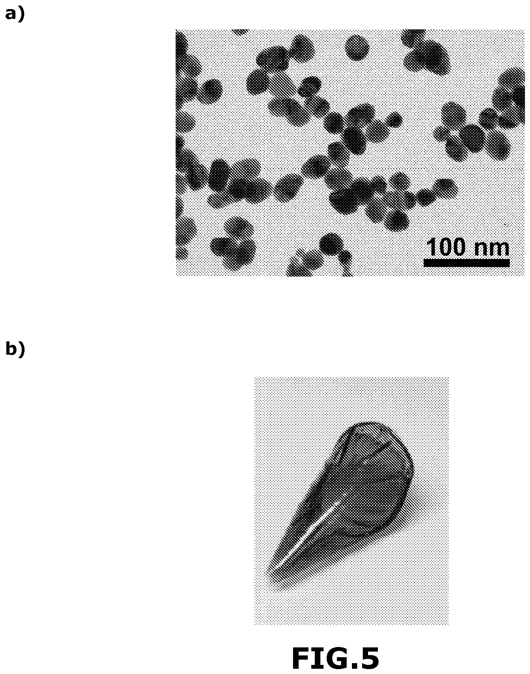

La figure 5a montre lesdites nanoparticules d'or par microscopie électronique à transmission (MET). Elles sont grossièrement sphériques et présentent un diamètre de 30 nm environ.

Une solution aqueuse comprenant 4,4 g d'alcool polyvinylique PVA dans 100 ml d'eau distillée ultrapure a été préparée.

La concentration molaire en PVA dans la solution aqueuse était de 1 mol/l.

Puis, dans un cristallisoir de diamètre 3 cm, 2 ml de la suspension colloïdale aqueuse de nanoparticules d'or telle que préparée ci-dessus a été mélangé avec 3 ml de ladite solution aqueuse de PVA. La hauteur H de la solution résultante dans le cristallisoir était de 5 mm.

La concentration en or dans le mélange était de 0,35 mmol/l.

La concentration molaire en PVA dans le mélange était de 0,6 mol/l.

Puis le mélange a été placé dans une étuve à 70°C jusqu'à évaporation complète de l'eau (10 heures environ).

Le film obtenu présentait une épaisseur E de 90 µm environ.

Le film obtenu présentait un coefficient de transmission optique de 40% environ, mesuré par un spectromètre UV-visible conventionnel à 490 nm.

La figure 5b montre le film qui est de couleur violette aussi bien en transmission qu'en rétrodiffusion. L'effet bichromatique n'est donc pas observé.

## Revendications

1. Procédé de préparation d'un matériau bichromatique sous la forme d'un film translucide,
ledit film translucide étant un film présentant un coefficient de transmission optique allant de 10% à 80%, mesuré par un spectromètre UV-visible à une longueur d'onde de 490 nm,
ledit matériau bichromatique comprenant des nanoparticules monodisperses constituées d'or et éventuellement d'un métal noble choisi parmi le platine, le palladium, l'argent et le cuivre (NP), et au moins une macromolécule organique choisie parmi les protéines, les polysaccharides et les polymères synthétiques,
ledit procédé comportant les étapes suivantes :
i) une étape de mélange d'au moins une macromolécule organique choisie parmi les protéines, les polysaccharides et les polymères synthétiques avec une suspension colloïdale So de NP, et
ii) une étape de séchage du mélange de l'étape i), afin de former un matériau bichromatique sous la forme d'un film translucide déposé sur un support,
ledit procédé étant **caractérisé en ce que** :
* les NP sont sous forme sphérique et présentent un diamètre allant de 70 à 100 nm, les NP étant monodisperses, elles sont définies par un diamètre d = do ± ε, avec ε < 0,2xdo,
* la concentration molaire en or dans le mélange de l'étape i) va de 10⁻⁴ à 5x10⁻¹ mol/l,
* la concentration molaire en macromolécule dans le mélange de l'étape i) va de 0,001 à 5 mol/l,
* le film présente une densité volumique allant de 0,5x10¹⁰ à 5,0x10¹⁰ NP/cm³ pour 1 mm d'épaisseur E de film, et
* ledit matériau présente deux couleurs complémentaires distinctes à l'œil nu, une couleur en transmission et une couleur en rétrodiffusion.

2. Procédé selon la revendication 1, **caractérisé en ce que** le film présente une épaisseur E allant de 10 µm à 10 mm.

3. Procédé selon la revendication 1 ou la revendication 2, **caractérisé en ce que** le support est un substrat transparent ou translucide.

4. Procédé selon la revendication 3, **caractérisé en ce que** le substrat transparent ou translucide est en verre, en vitro-céramique, en céramique, en matière plastique ou en papier cellulosique.

5. Procédé selon l'une quelconque des revendications précédentes, **caractérisé en ce que** la suspension colloïdale S₀ comprend de 10⁻⁴ à 5x10⁻¹ mol/l d'or.

6. Procédé selon l'une quelconque des revendications précédentes, **caractérisé en ce que** l'étape i) est réalisée en mélangeant dans un contenant comprenant au moins une surface intérieure apte à recevoir ledit mélange :
* ladite suspension colloïdale S₀ comprenant des NP, ladite suspension colloïdale S₀ comprenant de 10⁻⁴ à 5x10⁻¹ mol/l d'or, avec
* une solution S₀' comprenant ladite macromolécule organique, ladite solution S₀' comprenant de 10⁻³ à 5 mol/l de macromolécule organique,
étant entendu que :
- le rapport volumique : volume de la suspension colloïdale So/volume de la solution S₀' va de 0,1 à 100, et
- la suspension résultante présente une hauteur H dans le contenant allant de 0,1 à 30 mm.

7. Procédé selon l'une quelconque des revendications précédentes, **caractérisé en ce qu'**il comprend en outre entre l'étape i) et l'étape ii), une étape i-1) d'application du mélange de l'étape i) sur ledit support.

8. Procédé selon la revendication 6, **caractérisé en ce que** la surface intérieure dudit contenant joue le rôle du support de l'étape ii) et l'étape ii) est réalisé en séchant directement ledit contenant comprenant ledit mélange.

9. Procédé selon l'une quelconque des revendications précédentes, **caractérisé en ce que** l'étape ii) est effectuée à une température allant de 50°C à 150°C.

10. Procédé selon l'une quelconque des revendications précédentes, **caractérisé en ce qu'**il comprend en outre après l'étape ii), une étape iii) de traitement thermique à une température allant de 20 à 200°C.

11. Procédé selon l'une quelconque des revendications précédentes, **caractérisé en ce qu'**il comprend en outre après l'étape ii) ou après l'étape iii), une étape iv) au cours de laquelle le film de matériau bichromatique est enlevé ou décollé dudit support.

12. Procédé selon l'une quelconque des revendications précédentes, **caractérisé en ce que** la suspension colloïdale S₀ est préalablement préparée selon les étapes suivantes :
A) une étape de préparation d'une suspension colloïdale comprenant des germes d'un métal choisi parmi l'or, le platine, le palladium, le cuivre et l'argent, lesdits germes de métal étant sous forme sphérique et présentant un diamètre allant de 1 à 30 nm, ladite suspension colloïdale aqueuse comprenant une concentration molaire en métal allant de 5x10⁻⁵ mol/l à 10⁻² mol/l, et
B) une étape de préparation de ladite suspension colloïdale S₀ à partir de la suspension colloïdale comprenant des germes de l'étape A).

13. Procédé selon la revendication 12, **caractérisé en ce que** l'étape A) est effectuée par la méthode de Turkevich-Frens, par radiolyse ou par irradiation.

14. Procédé selon la revendication 12, **caractérisé en ce que** les germes sont des germes d'or et l'étape A) comprend :
- une sous-étape A₁) de chauffage à la température d'ébullition d'une solution S₁ comprenant au moins un sel d'or dans lequel l'or est à l'état d'oxydation (+III) ou (+I), la concentration molaire en ion or [Au³⁺] ou [Au⁺] dans ladite solution aqueuse S₁ allant de 5x10⁻⁵ mol/l à 10⁻² mol/l,
- une sous-étape A₂) de mélange de la solution S₁ de la sous-étape A₁) avec une solution S₂ comprenant au moins un agent réducteur et éventuellement un agent stabilisant, la concentration molaire en agent réducteur dans ladite solution S₂ [Agent réducteur] allant de 5x10⁻⁵ mol/l à 5x10⁻¹ mol/l, étant entendu que le rapport molaire : nombre de moles d'agent réducteur / nombre de moles d'ion or Au³⁺ ou Au⁺ va de 0,1 à 20,
- une sous-étape A₃) de maintien du chauffage à la température d'ébullition du mélange de la sous-étape A₂) jusqu'à la réduction complète de l'or (III) ou l'or (I) en or (0), et
- une sous-étape A₄) de refroidissement à température ambiante afin d'obtenir ladite suspension colloïdale comprenant des germes d'or.

15. Procédé selon l'une quelconque des revendications 12 ou 14, **caractérisé en ce que** les germes sont des germes d'or et l'étape B) comprend :
- une sous-étape B₁) de chauffage à la température d'ébullition d'une solution S₃ comprenant au moins un sel d'or dans lequel l'or est à l'état d'oxydation (+III) ou (+I), la concentration en ion or [Au³⁺] ou [Au⁺] dans ladite solution S₃ allant de 10⁻⁴ mol/l à 0,1 mol/l,
- une sous-étape B₂) de mélange de la solution S₃ de la sous-étape B₁) avec la suspension colloïdale comprenant des germes telle qu'obtenue à l'étape A) ou à la sous-étape A₄), étant entendu que le rapport molaire défini par le nombre de moles d'ion or Au³⁺ ou Au⁺ de la solution S₃/le nombre de moles d'or Au⁰ de la suspension colloïdale de germes d'or va de 5 à 1000,
- une sous-étape B₃) de mélange d'une solution S₄ comprenant au moins un agent réducteur et éventuellement un agent stabilisant avec le mélange de la sous-étape B₂), la concentration en agent réducteur dans ladite solution S₄ [Agent réducteur] allant de 2x10⁻⁵ mol/l à 2 mol/l, étant entendu que le rapport molaire : nombre de moles d'agent réducteur / nombre de moles d'ion or Au³⁺ ou Au⁺ va de 0,1 à 10,
- une sous-étape B₄) de maintien du chauffage à la température d'ébullition du mélange de la sous-étape B₃) jusqu'à la réduction complète de l'or (III) ou l'or (I) en or (0), et
- une sous-étape B₅) de refroidissement à température ambiante afin d'obtenir ladite suspension colloïdale S₀.

16. Matériau bichromatique sous la forme d'un film translucide tel qu'obtenu selon le procédé défini à l'une quelconque des revendications 1 à 15,
ledit film translucide étant un film présentant un coefficient de transmission optique allant de 10% à 80%, mesuré par un spectromètre UV-visible à une longueur d'onde de 490 nm
ledit matériau bichromatique comprenant des NP et au moins une macromolécule organique choisie parmi les protéines, les polysaccharides et les polymères synthétiques, ledit matériau étant **caractérisé en ce qu'**il présente deux couleurs complémentaires distinctes à l'œil nu, une couleur en transmission et une couleur en rétrodiffusion et **en ce que** :
* les NP sont sous forme sphérique et présentent un diamètre allant de 70 à 100 nm, les NP étant monodisperses, elles sont définies par un diamètre d = d₀ ± ε, avec ε < 0,2xd₀, et
* ledit film présente une densité volumique allant de 0,5x10¹⁰ à 5,0x10¹⁰ NP/cm³ pour 1 mm d'épaisseur E de film.

17. Matériau selon la revendication 16, **caractérisé en ce qu'**il présente une épaisseur E allant de 10 µm à 10 mm.

18. Utilisation d'un matériau bichromatique sous la forme d'un film translucide tel qu'obtenu selon le procédé défini à l'une quelconque des revendications 1 à 15 ou tel que défini à la revendication 16 ou 17, pour revêtir un substrat transparent ou translucide.

19. Utilisation selon la revendication 18, **caractérisée en ce que** le substrat transparent ou translucide est en verre, en vitro-céramique, en céramique, en matière plastique ou en papier cellulosique.

20. Utilisation d'un matériau bichromatique sous la forme d'un film translucide tel qu'obtenu selon le procédé défini à l'une quelconque des revendications 1 à 15 ou tel que défini à la revendication 16 ou 17, comme moyen d'authentification, de décoration ou de protection.

## Patentansprüche

1. Verfahren zur Herstellung eines bichromatischen Materials in Form eines durchscheinenden Films,
wobei es sich bei dem durchscheinenden Film um einen Film handelt, der einen mit einem UV-sichtbares-Licht-Spektralphotometer bei einer Wellenlänge von 490 nm gemessenen optischen Transmissionsgrad von 10 % bis 80 % aufweist,
wobei das bichromatische Material monodisperse Nanopartikel umfasst, die aus Gold und gegebenenfalls einem Edelmetall, ausgewählt aus Platin, Palladium, Silber und Kupfer, (NP) und mindestens einem organischen Makromolekül, ausgewählt aus Proteinen, Polysacchariden und synthetischen Polymeren, bestehen,
wobei das Verfahren die folgenden Schritte umfasst:
i) einen Schritt des Mischens mindestens eines organischen Makromoleküls, ausgewählt aus Proteinen, Polysacchariden und synthetischen Polymeren, mit einer kolloidalen Suspension S₀ von NP und
ii) einen Schritt des Trocknens des Gemischs von Schritt i) zum Herstellen eines auf einen Träger aufgebrachten bichromatischen Materials in Form durchscheinenden Films,
wobei das Verfahren **dadurch gekennzeichnet ist, dass**:
• die NP kugelförmig sind und einen Durchmesser von 70 bis 100 nm aufweisen, wobei die NP monodispers sind, durch einen Durchmesser d = do ± ε mit ε < 0,2xdo definiert sind,
• die molare Konzentration von Gold in dem Gemisch von Schritt i) 10⁻⁴ bis 5x10⁻¹ mol/l beträgt,
• die molare Konzentration an Makromolekül in dem Gemisch von Schritt i) 0,001 bis 5 mol/l beträgt,
• der Film eine Volumendichte von 0,5x10¹⁰ bis 5,0x10¹⁰ NP/cm³ für eine Filmdicke E von 1 mm aufweist und
• das Material zwei mit bloßem Auge unterscheidbare Komplementärfarben, eine Farbe in der Transmission und eine Farbe in der Rückstreuung, aufweist.

2. Verfahren nach Anspruch 1, **dadurch gekennzeichnet, dass** der Film eine Dicke E von 10 µm bis 10 mm aufweist.

3. Verfahren nach Anspruch 1 oder Anspruch 2, **dadurch gekennzeichnet, dass** der Träger ein transparentes oder durchscheinendes Substrat ist.

4. Verfahren nach Anspruch 3, **dadurch gekennzeichnet, dass** das transparente oder durchscheinende Substrat aus Glas, Glaskeramik, Keramik, Kunststoffmaterial oder Zellulosepapier besteht.

5. Verfahren nach einem der vorhergehenden Ansprüche, **dadurch gekennzeichnet, dass** die kolloidale Suspension S₀ 10⁻⁴ bis 5x10⁻¹ mol/l Gold umfasst.

6. Verfahren nach einem der vorhergehenden Ansprüche, **dadurch gekennzeichnet, dass** man in Schritt i) in einem Behälter, der mindestens eine Innenfläche umfasst, die zum Aufnehmen des Gemischs geeignet ist, Folgendes mischt:
• die kolloidale Suspension S₀, die die NP umfasst, wobei die kolloidale Suspension S₀ 10⁻⁴ bis 5x10⁻¹ mol/l Gold umfasst, mit
• einer Lösung So', die das organische Makromolekül umfasst, wobei die Lösung S₀' 10⁻³ bis 5 mol/l organisches Makromolekül umfasst,
unter der Voraussetzung, dass:
- das Volumenverhältnis: Volumen der kolloidalen Suspension S₀/Volumen der Lösung S₀' 0,1 bis 100 beträgt und
- die erhaltene Suspension eine Höhe H von 0,1 bis 30 mm im Behälter aufweist.

7. Verfahren nach einem der vorhergehenden Ansprüche, **dadurch gekennzeichnet, dass** es außerdem zwischen Schritt i) und Schritt ii) einen Schritt i-1) des Aufbringens des Gemischs von Schritt i) auf den Träger umfasst.

8. Verfahren nach Anspruch 6, **dadurch gekennzeichnet, dass** die Innenfläche des Behälters die Rolle des Trägers von Schritt ii) spielt und Schritt ii) durch direktes Trocknen des Behälters, der das Gemisch umfasst, durchgeführt wird.

9. Verfahren nach einem der vorhergehenden Ansprüche, **dadurch gekennzeichnet, dass** Schritt ii) bei einer Temperatur von 50 °C bis 150 °C durchgeführt wird.

10. Verfahren nach einem der vorhergehenden Ansprüche, **dadurch gekennzeichnet, dass** es außerdem nach Schritt ii) einen Schritt iii) der thermischen Behandlung bei einer Temperatur von 20 °C bis 200 °C umfasst.

11. Verfahren nach einem der vorhergehenden Ansprüche, **dadurch gekennzeichnet, dass** es außerdem nach Schritt ii) oder nach Schritt iii) einen Schritt iv) umfasst, in dem der Film aus bichromatischem Material von dem Träger abgehoben oder abgelöst wird.

12. Verfahren nach einem der vorhergehenden Ansprüche, **dadurch gekennzeichnet, dass** die kolloidale Suspension S₀ vorher gemäß den folgenden Schritten hergestellt wird:
A) einem Schritt der Herstellung einer kolloidalen Suspension, umfassend Keime eines Metalls, ausgewählt aus Gold, Platin, Palladium, Kupfer und Silber, wobei die Metallkeime kugelförmig sind und einen Durchmesser von 1 bis 30 nm aufweisen, wobei die wässrige kolloidale Suspension eine molare Konzentration an Metall von 5x10⁻⁵ mol/l bis 10⁻² mol/l umfasst, und
B) einem Schritt der Herstellung der kolloidalen Suspension S₀ aus der die Keime umfassenden kolloidalen Suspension von Schritt A).

13. Verfahren nach Anspruch 12, **dadurch gekennzeichnet, dass** Schritt A) nach der Turkevich-Frens-Methode, durch Radiolyse oder durch Bestrahlung durchgeführt wird.

14. Verfahren nach Anspruch 12, **dadurch gekennzeichnet, dass** die Keime Goldkeime sind und Schritt A) Folgendes umfasst:
- einen Teilschritt A₁) des Erhitzens auf den Siedepunkt einer Lösung S₁, die mindestens ein Goldsalz umfasst, wobei das Gold im Oxidationszustand (+III) oder (+I) ist, die molare Konzentration an Goldion [Au³⁺] oder [Au⁺] in der wässrigen Lösung S₁ 5x10⁻⁵ mol/l bis 10⁻² mol/l beträgt,
- einen Teilschritt A₂) des Mischens der Lösung S₁ des Teilschritts A1) mit einer Lösung S₂, die mindestens ein Reduktionsmittel und gegebenenfalls ein Stabilisierungsmittel umfasst, wobei die molare Konzentration an Reduktionsmittel in der Lösung S₂ [Reduktionsmittel] 5x10⁻⁵ mol/l bis 5x10⁻¹ mol/l beträgt, unter der Voraussetzung, dass das Molverhältnis: Anzahl Mole Reduktionsmittel/ Anzahl Mole Goldion Au³⁺ oder Au⁺ von 0,1 bis 20 beträgt,
- einen Teilschritt A₃) des Aufrechterhaltens der Erhitzung des Gemischs von Teilschritt A₂) am Siedepunkt bis zur vollständigen Reduktion des Gold(III) oder Gold(I) zu Gold(0) und
- einen Teilschritt A₄) des Abkühlens auf Umgebungstemperatur, um die Goldkeime umfassende kolloidale Suspension zu erhalten.

15. Verfahren nach einem der Ansprüche 12 oder 14, **dadurch gekennzeichnet, dass** es sich bei den Keimen um Goldkeime handelt und Schritt B) Folgendes umfasst:
- einen Teilschritt B₁) des Erhitzens auf den Siedepunkt einer Lösung S₃, die mindestens ein Goldsalz umfasst, wobei das Gold im Oxidationszustand (+III) oder (+I) ist, wobei die Konzentration an Goldion [Au³⁺] oder [Au⁺] in der Lösung S₃ 10⁻⁴ mol/l bis 0,1 mol/l beträgt,
- einen Teilschritt B₂) des Mischens der Lösung S₃ des Teilschritts B₁) mit der die Keime umfassenden kolloidalen Suspension, wie sie im Schritt A) oder im Teilschritt A₄) erhalten wird, unter der Voraussetzung, dass das durch die Anzahl Mole Goldion Au³⁺ oder Au⁺ der Lösung S₃/die Anzahl Mole Gold Au⁰ der kolloidalen Suspension von Goldkeimen definierte Molverhältnis 5 bis 1000 beträgt,
- einen Teilschritt B₃) des Mischens einer Lösung S₄, die mindestens ein Reduktionsmittel und gegebenenfalls ein Stabilisierungsmittel umfasst, mit dem Gemisch von Teilschritt B₂), wobei die Konzentration an Reduktionsmittel in der Lösung S₄ [Reduktionsmittel] 2x10⁻⁵ mol/l bis 2 mol/l beträgt, unter der Voraussetzung, dass das Molverhältnis: Anzahl Mole Reduktionsmittel/ Anzahl Mole Goldion Au³⁺ oder Au⁺ 0,1 bis 10 beträgt,
- einen Teilschritt B₄) des Aufrechterhaltens der Erhitzung des Gemischs von Teilschritt B₃) am Siedepunkt bis zur vollständigen Reduktion des Gold(III) oder des Gold(I) zu Gold(0) und
- einen Teilschritt B₅) des Abkühlens auf Umgebungstemperatur, um die kolloidale Suspension S₀ zu erhalten.

16. Bichromatisches Material in Form eines durchscheinenden Films, erhalten gemäß dem Verfahren nach einem der Ansprüche 1 bis 15, wobei es sich bei dem durchscheinenden Film um einen Film handelt, der einen mit einem UV-sichtbares-Licht-Spektralphotometer bei einer Wellenlänge von 490 nm gemessenen optischen Transmissionsgrad von 10 % bis 80 % aufweist,
wobei das bichromatische Material NP und mindestens ein organisches Makromolekül, ausgewählt aus Proteinen, Polysacchariden und synthetischen Polymeren, umfasst, wobei das Material **dadurch gekennzeichnet ist, dass** zwei mit bloßem Auge unterscheidbare Komplementärfarben, eine Farbe in der Transmission und eine Farbe in der Rückstreuung, aufweist, und dadurch, dass:
• die NP kugelförmig sind und einen Durchmesser von 70 bis 100 nm aufweisen, wobei die NP monodispers sind, durch einen Durchmesser d = do ± ε mit ε < 0,2xdo definiert sind und
• der Film eine Volumendichte von 0,5x10¹⁰ bis 5,0x10¹⁰ NP/cm³ für eine Filmdicke E von 1 mm aufweist.

17. Material nach Anspruch 16, **dadurch gekennzeichnet, dass** es eine Dicke E von 10 µm bis 10 mm aufweist.

18. Verwendung eines bichromatischen Materials in Form eines durchscheinenden Films, erhalten gemäß dem Verfahren nach einem der Ansprüche 1 bis 15 oder nach Anspruch 16 oder 17, zum Beschichten eines transparenten oder durchscheinenden Substrats.

19. Verwendung nach Anspruch 18, **dadurch gekennzeichnet, dass** das transparente oder durchscheinende Substrat aus Glas, Glaskeramik, Keramik, Kunststoff oder Zellulosepapier besteht.

20. Verwendung eines bichromatischen Materials in Form eines durchscheinenden Films, erhalten gemäß dem Verfahren nach einem der Ansprüche 1 bis 15 oder nach Anspruch 16 oder 17, als Authentifizierungs-, Dekorations- oder Schutzmittel.

## Claims

1. Process for preparing a dichromatic material in the form of a translucent film,
said translucent film being a film having an optical transmission coefficient ranging from 10% to 80%, measured by a conventional UV-visible spectrometer at a wavelength of 490 nm.
said dichromatic material comprising monodisperse nanoparticles formed of gold and optionally of a noble metal chosen from platinum, palladium, silver and copper (NP), and at least one organic macromolecule selected from proteins, polysaccharides and synthetic polymers,
said process comprising the following steps:
i) a step of mixing at least one organic macromolecule selected from proteins, polysaccharides and synthetic polymers with a colloidal suspension S₀ of NP, and
ii) a step of drying the mixture of step i), in order to form a dichromatic material in the form of a translucent film deposited on a support,
said process being **characterized in that**:
* the NPs are in spherical form and have a diameter ranging from 70 to 100 nm, the NPs being monodisperses, they are defined by a diameter d = do ± ε, with ε < 0.2xdo
* the molar concentration of gold in the mixture of step i) ranges from 10⁻⁴ to 5x10⁻¹ mol/l,
* the molar concentration of macromolecule in the mixture of step i) ranges from 0.001 to 5 mol/l,
* the film has a volume density ranging from 0.5x10¹⁰ to 5.0x1010 NPs/cm³ for a 1 mm film thickness E, and
* said material has two complementary colours distinct to the naked eye, one colour in transmission and one colour in backscattering.

2. Process according to Claim 1, **characterized in that** the film has a thickness E ranging from 10 µm to 10 mm.

3. Process according to Claim 1 or Claim 2, **characterized in that** the support is a transparent or translucent substrate.

4. Process according to Claim 3, **characterized in that** the transparent or translucent substrate is made of glass, glass-ceramic, ceramic, plastic or cellulose paper.

5. Process according to any one of the preceding claims, **characterized in that** the colloidal suspension S₀ comprises from 10⁻⁴ to 5x10⁻¹ mol/l of gold.

6. Process according to any one of the preceding claims, **characterized in that** step i) is carried out by mixing in a container comprising at least one inner surface suitable for receiving said mixture:
* said colloidal suspension S₀ comprising NP, said colloidal suspension S₀ comprising from 10⁻⁴ to 5x10⁻¹ mol/l of gold, with
* a solution S₀' comprising said organic macromolecule, said solution S₀' comprising from 10⁻³ to 5 mol/l of organic macromolecule,
it being understood that:
- the volume ratio: volume of the colloidal suspension So/volume of the solution S₀' ranges from 0.1 to 100, and
- the resulting suspension has a height H in the container ranging from 0.1 to 30 mm.

7. Process according to any one of the preceding claims, **characterized in that** it additionally comprises, between step i) and step ii), a step i-1) of applying the mixture from step i) to said support.

8. Process according to Claim 6, **characterized in that** the inner surface of said container acts as support for step ii) and step ii) is carried out by directly drying said container comprising said mixture.

9. Process according to any one of the preceding claims, **characterized in that** step ii) is carried out at a temperature ranging from 50°C to 150°C.

10. Process according to any one of the preceding claims, **characterized in that** it additionally comprises, after step ii), a step iii) of heat treatment at a temperature ranging from 20°C to 200°C.

11. Process according to any one of the preceding claims, **characterized in that** it additionally comprises, after step ii) or after step iii), a step iv) during which the film of dichromatic material is removed or unstuck from said support.

12. Process according to any one of the preceding claims, **characterized in that** the colloidal suspension S₀ is prepared beforehand according to the following steps:
A) a step of preparing a colloidal suspension comprising seeds of a metal selected from gold, platinum, palladium, copper and silver, said metal seeds being in spherical form and having a diameter ranging from 1 to 30 nm, said aqueous colloidal suspension comprising a molar concentration of metal ranging from 5x10⁻⁵ mol/l to 10⁻² mol/l, and
B) a step of preparing said colloidal suspension S₀ from the colloidal suspension comprising seeds from step A).

13. Process according to Claim 12, **characterized in that** step A) is carried out by the Turkevich-Frens method, by radiolysis or by irradiation.

14. Process according to Claim 12, **characterized in that** the seeds are gold seeds and step A) comprises:
- a substep A₁) of heating to boiling point a solution S₁ comprising at least one gold salt in which the gold is in the (+III) or (+I) oxidation state, the molar concentration of [Au³⁺] or [Au⁺] gold ions in said aqueous solution S₁ ranging from 5x10⁻⁵ mol/l to 10⁻² mol/l,
- a substep A₂) of mixing the solution S₁ from substep A₁) with a solution S₂ comprising at least one reducing agent and optionally a stabilizer, the molar concentration of reducing agent in said solution S₂ [Reducing agent] ranging from 5x10⁻⁵ mol/l to 5x10⁻¹ mol/l, it being understood that the molar ratio: number of moles of reducing agent / number of moles of Au³⁺ or Au⁺ gold ions ranges from 0.1 to 20,
- a substep A₃) of maintaining the heating to boiling point of the mixture from substep A₂) until the gold (III) or the gold (I) has been completely reduced to gold (0), and
- a substep A₄) of cooling to ambient temperature in order to obtain said colloidal suspension comprising gold seeds.

15. Process according to either one of Claims 12 and 14, **characterized in that** the seeds are gold seeds and step B) comprises:
- a substep B₁) of heating to boiling point a solution S₃ comprising at least one gold salt in which the gold is in the (+III) or (+I) oxidation state, the concentration of [Au³⁺] or [Au⁺] gold ions in said solution S₃ ranging from 10⁻⁴ mol/l to 0.1 mol/l,
- a substep B₂) of mixing the solution S₃ from substep B₁) with the colloidal suspension comprising seeds as obtained in step A) or in substep A₄), it being understood that the molar ratio defined by the number of moles of Au³⁺ or Au⁺ gold ions of the solution S₃/the number of moles of Au⁰ gold of the colloidal suspension of gold seeds ranges from 5 to 1000,
- a substep B₃) of mixing a solution S₄ comprising at least one reducing agent and optionally a stabilizer with the mixture from substep B₂), the concentration of reducing agent in said solution S₄ [Reducing agent] ranging from 2x10⁻⁵ mol/l to 2 mol/l, it being understood that the molar ratio: number of moles of reducing agent / number of moles of Au³⁺ or Au⁺ gold ions ranges from 0.1 to 10,
- a substep B₄) of maintaining the heating to boiling point of the mixture from substep B₃) until the gold (III) or the gold (I) has been completely reduced to gold (0), and
- a substep B₅) of cooling to ambient temperature in order to obtain said colloidal suspension S₀.

16. Dichromatic material in the form of a translucent film as obtained according to the process defined in any one of Claims 1 to 15,
said translucent film being a film having an optical transmission coefficient ranging from 10% to 80%, measured by a conventional UV-visible spectrometer at a wavelength of 490 nm.
said dichromatic material comprising NPs and at least one organic macromolecule chosen from proteins, polysaccharides and synthetic polymers, said material being **characterized in that** it has two complementary colours distinct to the naked eye, one colour in transmission and one colour in backscattering and **in that**:
* the NPs are in spherical form and have a diameter ranging from 70 to 100 nm, the NPs being monodisperses, they are defined by a diameter d = do ± ε, with ε < 0.2xdo, and
* said film has a volume density ranging from 0.5x10¹⁰ to 5.0x1010 NPs/cm³ for a 1 mm film thickness E.

17. Material according to Claim 16, **characterized in that** it has a thickness E ranging from 10 µm to 10 mm.

18. Use of a dichromatic material in the form of a translucent film as obtained according to the process defined in any one of Claims 1 to 15 or as defined in Claim 16 or 17, for coating a transparent or translucent substrate.

19. Use according to Claim 18, **characterized in that** the transparent or translucent substrate is made of glass, glass-ceramic, ceramic, plastic or cellulose paper.

20. Use of a dichromatic material in the form of a translucent film as obtained according to the process defined in any one of Claims 1 to 15 or as defined in Claim 16 or 17, as means of authentication, decoration or protection.
